# EUROPEAN PATENT APPLICATION

(11) **EP 2 672 414 A1**
(43) Date of publication of application: **11.12.2013**
(21) Application number: 12004365.8
(22) Date of filing: 08.06.2012
(51) Int. Cl.: G06F 21/00

(54) **Method for transferring configuration data to controller devices, a system and a computer program product**

(71) Applicant: Sodge IT GmbH, 72336 Balingen (DE)
(72) Inventor: Ehinger, Matthias, 72336 Balingen (DE); Feurle, David, 71126 Nebringen (DE); Martinek, Götz, 72459 Albstadt-Pfeffingen (DE)
(74) Representative: Müller-Boré & Partner Patentanwälte

(57) **Abstract**

Method for transferring configuration data (605) for controller devices (105), the method comprising: receiving a first certificate (603) via a first device interface (203), receiving a signed data container (604) via the first device interface (203), the signed data container (604) comprising configuration data (605) for at least one controller device (105), providing a harmful code repository (810) comprising a plurality of predefined data signatures, verifying the signed data container (604) using the first certificate (603); if the signed data container (604) is verified successfully, storing a copy of the configuration data (605) for the at least one controller device (105) in a storage container (809) and detecting whether at least one of the predefined data signatures is included in the copy of the configuration data (605) for the at least one controller device (105); if no predefined data signature is detected, activating a second device interface (204) connectable to the at least one controller device (105) to allow access to the copy of the configuration data (605) via the second device interface (204).

## Description

### Field of the Invention

The present application relates to data transfer to isolated computer systems (e.g. isolated networks), such as controller devices in security relevant industrial systems. In particular, the present application relates to a computer-implemented method for ensuring data security of controller devices, a computer-program product, and a device.

### Background

The security of controller devices in industrial systems (e.g. power plants, oil production, manufacturing, food industry) is increasingly important to prevent the industrial systems from failures and damages due to malfunction of the controller devices. Malicious or harmful code (e.g. viruses, worms, malware, and/or spam) on the controller devices may significantly influence the industrial processes controlled by the controller devices. For example, viruses or worms like stuxnet or duqu may lead to malfunction of machines in industrial systems. In security-relevant domains of industry like power plants, malfunction of controller devices may have severe impact.

Currently, in some implementations the security of controller devices is implemented by using separate computer networks and firewalls. A firewall separates computer networks using filters (e.g. black lists or white lists) and rules which may block or allow defined devices of one computer network to access devices of another computer network.

In other implementations, security-relevant industrial systems are operated as island systems. The protection of the island systems originates from an air gap (i.e. a physical disjunction or separation of the industrial systems). The air gap is a security measure for industrial systems that must be extraordinary secure. The air gap ensures that the systems are completely physically, electrically and electromagnetically isolated from insecure systems such as systems connected to the public internet or systems connected to a local network. The only way of transferring data to these systems is by connecting mobile and/or removable storage media to the systems (e.g. to the controller devices of the systems). The advantage of such systems is that there is a closed system which can not be accessed from the outside world via a computer network. In these implementations, data may be transferred from and to the isolated network using removable storage media, such as USB devices, SD cards, floppies, compact discs (CDs).

The maintenance of controller devices requires that configuration data for the controller devices, such as updates of a controller software, are transferred to a controller device, e.g. via removable storage media. In some conventional implementations, the configuration data for the controller devices are prepared at a separate computer (process computer) before transferring the data to the controller device using a removable storage medium, for example. Security software running on the process computer may ensure that the prepared configuration data are free of malicious code that could affect the security of the controller device. Moreover, the security of the removable storage medium itself may be ensured by additionally scanning the removable storage medium by means of the process computer or any other computer to which the removable storage medium is connected prior to connecting the removable storage medium to the controller device. In yet another example, the security software may be installed on the controller device itself.

The risk of malicious code infecting controller devices via removable storage media and the potential damage caused by such malicious code continuously increases with the common availability of standard personal computer technology (e.g. USB drives) in industrial systems.
Thus, according to an aspect, it is a problem to improve the transfer of configuration data to controller device.

The problem is solved by a computer implemented method according to claim 1, a device according to claim 10, and a computer program product according to claim 15. Preferred embodiments are defined in the dependent claims.

### Summary

According to an aspect, the invention provides a method for transferring configuration data for controller devices (e.g. programmable logic controllers (PLC), industry personal computers (IPC)). In one aspect, the configuration data may comprise program code executable on one or more controller device for causing the controller device to perform the desired control operations. Additionally or alternative, the configuration data may comprise configuration parameters for configuring the operation of one or more controller device, i.e. for configuring a computer program previously installed on the controller device(s) and running thereon. Additionally or alternatively, the configuration data may comprise updates for a previously installed computer program.

According to the present invention, the method comprises receiving a first certificate, which may be called user certificate in the following, via a first device interface. The first certificate allows authentication of the data transfer process, since it provides the possibility to uniquely identify a specific user who is authorized to transfer data. In particular, the certificate may include a public key of a public-private key pair. The first device interface may be a physical interface that is adapted for connection to a removable storage medium, such as a USB stick, and for receiving data from said removable storage medium. Thus, the certificate may be received from said removable storage medium connected to the first device interface.

The method further comprises receiving a signed data container via the first device interface, the signed data container comprising configuration data for at least one controller device. Accordingly, in case of a software update for the at least one controller device or in case of changing configuration parameters of the at least one controller device, the configuration data to be transferred to the controller device are included in a set of data, the data container, that is received at the first device interface and that is digitally signed in order to allow an integrity test of the included data during the data transfer process. In particular, the data container may be signed using a private key of a public-private key pair. Preferably, the signed data container is received from the same removable storage medium as the user certificate, most preferably together with the user certificate, i.e. without disconnecting the removable storage medium in the meantime. Thereby, the user certificate and the signed data container received via the first device interface are closely related to each other. The signed data container may comprise a data container and a signature of the data container which signs the data container.

Furthermore, a repository is provided that comprises a plurality of predefined data signatures of specific undesired digital code, such as virus definitions, worms, any other type of malware, spam, and any further program code or data (e.g. undesired configuration data) which may cause malfunctions on controller devices. Therefore, said repository shall be called 'harmful code repository' in the following. The harmful code repository may be regularly or irregularly updated to ensure protection of the at least one controller device against any kind of recently developed harmful or undesired code.

Preferably before searching for harmful code in the data to be transferred, the method further comprises verifying the signed data container using the user certificate. In particular, verifying the signed data container using the user certificate may comprise checking whether the public key included in the user certificate and the private key used for signing the signed data container belong to the same public-private key pair. Accordingly, successfully verifying the signed data container may ensure that no change or modification of the data container after signing the data container has been carried out.

If the signed data container is verified successfully, the method further comprises:
- storing a copy of the configuration data for the at least one controller device in a storage container; and
- detecting whether at least one of the predefined data signatures is included in the copy of the configuration data for the at least one controller device.

Moreover, if no predefined data signature is detected in the copy of the configuration data, the method further comprises:
- activating a second device interface connectable to the at least one controller device to allow access to the copy of the configuration data via the second device interface.

Accordingly, the present invention provides a method of securely transferring configuration data to a security-relevant environment of controller device that can be easily implemented without requiring extensive modification of the controller device or its interfaces. Moreover, when using a removable storage medium, such as a USB stick, for connection to the first device interface, the advantages of an "air gap" in an isolated system as described above may be utilized but with a significant improvement in data security as compared to conventional data transfer methods using "air gaps".

In one aspect, the invention may be implemented in a data transfer device having the first and the second device interface for connecting a data source, such as a removable storage medium (e.g. USB stick), to the at least one controller device. This data transfer device will be described in more detail below. Thereby, data transfer device may act as an intelligent cable, which connects the removable storage medium to the controller device. With the method according to the present invention, this intelligent cable appears transparent to the controller device. Transparent can be understood as the controller device itself does not need to differentiate between a removable storage medium directly connected to the controller device and a removable storage medium connected to the controller device via the data transfer device, which performs the method according to the invention. In particular, since the controller device has access to the storage container, where a copy of the configuration data is stored, the data transfer device (i.e. the intelligent cable itself) appears to the controller device as a removable storage medium without requiring a change of the interface configuration of the controller device. Since the second device interface, i.e. the controller device's access to the storage container, is only activated after the configuration data have passed a security check, the controller device is protected from undesired digital code without requiring to install or maintain extensive protection software in the controller device itself, even in case where the data received via the first device interface (e.g. from a removable storage medium) includes undesired code.

The intelligent cable, i.e. the data transfer device, may provide additional security features (e.g. access control to controller devices, virus scanning of data transferred to controller devices, protection of USB ports of controller devices) of the method according to the present invention and, thus, improves the security of controller devices in a transparent manner. An advantage of the solution according to the present invention is that warranty and guarantee of the controller devices may not be influenced. Further, no negative influence on the computing times of the controller devices is expected. The solution can be installed and integrated into existing controller device configurations without requiring a shutdown of the controller devices. Since controller devices may control industrial plants and machines of industrial plants, shutdown of controller devices would interrupt the manufacturing of industrial plants which is prevented with the present solution. Further, the time required to improve the security of controller devices is reduced.

Transferring configuration data for controller devices may comprise transferring the configuration data from a first device interface to a second device interface, and, in particular, may comprise transferring configuration data from a removable storage medium via the first device interface to one or more controller devices via the second controller interface. Configuration data may comprise configuration data of controller devices of industrial plants or machines (e.g. configuration data for PLC) which is used to configure the processing or manufacturing steps of industrial plants or one or more machines of the industrial plants. Examples for controller devices are programmable logic controllers (PLC) or industrial personal computers (IPC).

Receiving a certificate as described above may comprise receiving a public key included in the certificate. The first device interface may comprise a physical or virtual device interface which is able to receive data from a removable storage medium. Exemplary removable storage media comprise universal serial bus (USB) sticks or SD cards. Thus, the certificate may be received via a physical or virtual device interface from a removable storage medium connected to the physical or virtual device interface. An example of an certificate may comprise a certificate according to the x.509 v3 standard.

The harmful code repository may comprise one or more files or databases for storing the plurality of predefined data signatures. The plurality of predefined data signatures may refer to virus definitions, worms, malware, spam, and any further program code or data (e.g. configuration data) which may cause malfunctions on controller devices. Examples may comprise predefined data signatures to detect Stuxnet and duqu viruses.

It may be understood that verifying the signed data container using the certificate refers to verifying the signature of the data container using the public key included in the certificate. In particular, the data container may be signed using the private key of a public-private key pair and the signature of the data container is verified with the corresponding public key of the public-private key pair. Further, successfully verifying the signed data container may comprise checking whether the signature of the data container is correct or valid. In particular, successfully verifying may be understood that no change or modification of the data container after signing the data container is carried out. Thus, the integrity of the data container can be verified, since any changes or manipulations of the signed data container would lead to a different signature of the data container.

Preferably, further processing steps of the method are carried out only if the signed data container is verified successfully. Otherwise (i.e. if the signed data container is not verified successfully), the method preferably ends, and, most preferably, an error is reported. If the signed data container is verified successfully, a copy of the configuration data is stored in a storage container. The storage container may be implemented on a non-volatile or volatile storage

Storing a copy of the signed data container enables further processing of the data contained in the (copy of the) data container. In particular, storing the copy of the signed data container in the storage container creates a trusted and controlled environment in which the copy of the configuration data may be further analysed and processed by detecting whether at least one of the predefined data signatures is included in the copy of the configuration data for the at least one controller device. Detecting may be understood as checking or scanning of data included in the copy of the configuration data for harmful code using the plurality of predefined data signatures.

If no predefined data signature is detected, a second device interface is activated. Activating a second device interface may comprise initialling a device driver for the second device interface. Further, activating the second device interface may include mounting a virtual or physical device which is accessible via the second device interface. Allowing access may comprise setting access rights to the copy of the configuration data. Further, allowing access may include authentication and authorisation of one or more controller devices. Furthermore, allowing access may comprise exchanging data with one or more controller device to establish a connection to one or more controller devices.

Advantageously, activating the second device interface when no predefined data signature is detected and the signed data container is verified successfully increases the security of transferring configuration data. In particular, the integrity is improved by verifying the signed data container. Further, detecting no predefined data signature included in the harmful code repository improves integrity and security of the configuration data with respect to harmful operation being executed at one or more controller devices. Furthermore, performing the detecting operation on a copy of the configuration data stored in the storage container creates a controlled and/or trusted environment for detecting whether at least one of the predefined data signatures is included in the copy of the configuration data for the at least one controller device.

It may be understood that the method may be a method which automatically carries out the processing steps of the method. In particular, the method may be automatically carried out in the data transfer device as explained in more detail below.

In a preferred embodiment, the method further comprises:
receiving, from a key master computer, a site certificate and a revocation control list of site certificates;
storing the site certificate and the revocation control list in a certificate storage; and
checking the validity of the first certificate.

In this preferred embodiment, checking the validity of the first certificate preferably comprises:
checking whether the first certificate is derived from the stored site certificate; and
checking whether the first certificate is included in the revocation control list of site certificates.

Most preferably, the data container is received only if the first certificate is a valid certificate.

The key master computer or process computer may be understood as a computer storing a site certificate and a revocation control list of site certificates. The site certificate may refer to a certificate of a customer or organisational entity (e.g. production plant) of the customer. The site certificate may be used to sign the first certificate in order to delegate trust from the site certificate to the first certificate along a chain-of-trust. The revocation control list of site certificates may comprise a list of site certificates and a list of first certificates (e.g. user certificates) derived from the site certificate. An advantage of receiving the revocation control list is to be able to check whether the first certificate (e.g. a user certificate if a particular user) or the site certificate is not revoked (i.e. the first certificate or the site certificate is still valid and may be used to verify the signed data container).

Storing the site certificate and the revocation control list in a certificate storage may enable a local check whether a received first certificate or site certificate is not revoked. In particular, since no network access to remote computers is possible by the data transfer device, a local check of the validity of first and site certificates is possible.

Further, the method comprises checking the validity of the first certificate or the site certificate. Checking the validity of the first certificate comprises checking whether the first certificate is derived from the stored site certificate along a chain-of-trust. Deriving from the site certificate may include signing the first certificate with the private key of the site certificate. Thus, checking whether the first certificate is derived from the stored site certificate may comprise checking a signature of the first certificate using a public key of the site certificate. Checking the validity of the first certificate may further comprise checking whether the first certificate is included in the revocation control list of site certificates. If the first certificate is included in the revocation control list, the first certificate is revoked and, thus, the first certificate is not valid. If the first certificate is not included in the revocation control list, the first certificate is not revoked and, thus, valid. The signed data container may be received only if the first certificate is a valid certificate. In addition, the steps of detecting whether at least one of the predefined data signatures is included in the copy of the configuration data and activating the second device interface are not carried out if the first certificate is not valid.

Preferably, the first certificate has to be a valid certificate to continue executing further steps of the method. Further, only a signed data container with a valid first certificate is processed which further improves the security of the data transfer method. In advantage, checking the validity of the first certificate improves the security by enabling the validation of the source of the signed data container previous to processing the signed data container. The source of the data container may comprise a user, a organisation, a site or any other source which is able to use the first certificate. If the first certificate derived from the site certificate is assigned to a user, the user who uses the first certificate for singing the data container may be identified.

In a preferred embodiment, the method further comprises:
encrypting the storage container using a one-time-password, wherein the one-time-password is stored in a volatile memory. In one preferred embodiment, the storage container may be encrypted using a random one-time password or a temporary password. The password may be created previous to storing the copy of the configuration data. The password may be stored in a volatile memory. Storing the password in the volatile memory improves the security of the system, since the password will be automatically deleted if electric power is lost by the data transfer device. Further, storing the password in the volatile memory simplifies deleting the password by e.g. overwriting the password. Thus, malicious third parties may not be able to extract the copy of the configuration data from the encrypted storage container if power is lost and/or the password is overwritten in the volatile memory.

In a preferred embodiment, the signed data container further comprises metadata including a target identifier. Preferably, the method further comprises:
receiving, from a key master computer, a unique identifier,
storing the unique identifier,
comparing whether the target identifier equals to the unique identifier received from the key master computer,
wherein, preferably, the step of detecting whether at least one of the predefined data signatures is included in the copy of the configuration data is performed only if the target identifier equals the unique identifier.

Accordingly, the signed data container may comprise metadata which may include the target identifier. The target identifier may identify one or more data transfer devices to which the signed data container is addressed. By receiving a unique identifier from the key master computer and storing the unique identifier on the data transfer device, the unique identifier of the data transfer device may be set. The stored unique identifier may be compared to the target identifier to determine whether the signed data container is addressed to the data transfer device storing the unique identifier. Advantageously, the signed data container can be restricted to a specific data transfer device by specifying the corresponding target identifier in the metadata of the signed data container. If the target identifier does not equal to the unique identifier, the processing of the signed data container is terminated. If the target identifier equals to the unique identifier, the step of detecting may be carried out.

In a preferred embodiment, the signed data container further comprises an updated revocation control list of site certificates. Preferably, the method further comprises updating the revocation control list.

Accordingly, the signed data container may comprise the updated revocation control list of site certificates, which may update the previously stored revocation control list of site certificates. If the signed data container comprises the updated revocation control list, the revocation control list may be updated when receiving a signed data container. Thus, the revocation control list can be continuously updated when receiving a signed data container via the first device interface of the data transfer device. Therefore, the revocation control lists can be updated in a short time frame even if no network access is available to the data transfer device.

In a preferred embodiment, the method further comprises:
detecting whether a signed payload container is included in the signed data container, wherein the signed payload container comprises updates of the harmful code repository and a manufacturer certificate; and
verifying the signed payload container using the manufacturer certificate, wherein the signed payload container is verified after verifying the signed data container. Moreover, if the signed data container and the signed payload container are verified successfully, the method further comprises updating the harmful code repository.

Detecting whether a signed payload container is included in the signed data container may be understood as searching the signed payload container in the signed data container. The signed payload container may comprise updates of the harmful code repository and a manufacturer certificate and/or a sub-certificate derived from the manufacturer certificate. Verifying the signed payload container may comprise verifying the signature of the signed payload container using the public key of the manufacturer certificate and/or a public key of the sub-certificate of the manufacturer certificate. In addition, verifying the signed payload container after verifying the signed data container provides the advantage that only the updates of the harmful code repository may be processed which are additionally signed by the first certificate (i.e. approved by a user using the first certificate to sign the data container). Updates of the harmful code repository may require the signature of the signed data container and the signed payload container to be successfully verified in order to update the harmful code repository. Thus, updates of the manufacturer advantageously may not be directly processed without involving the update to be signed by using the site certificate and/or the first certificate. Thus, the security of updating the harmful code repository with updates of the manufacturer is improved.

In a preferred embodiment, if the at least one predefined signature is detected, the method further comprises: closing the encrypted storage container and overwriting the one-time password.

Detecting at least one predefined signature may be understood as detecting malicious code (e.g. viruses, malware, worms, or spam). If the at least one predefined signature is detected, the encrypted storage container may be closed and the one-time password overwritten. Since the encrypted storage container may be stored on a non-volatile memory, overwriting the one-time password may destroy the one-time password for accessing the encrypted storage container. Thus, no further access to the encrypted storage container is possible and the data container in the encrypted storage container may not be read by a malicious third party. Preferably, the processing of the signed data container is aborted or terminated. Most preferably, an error is reported when the at least one predefined signature is detected and the processing aborted (e.g. by using an LED of the data transfer device).

Preferably, activating the second device interface comprises mounting the storage container as a virtual mass storage device. Activating the second device interface may comprise mounting the storage container including the copy of the configuration data as a virtual mass storage device (e.g. a virtual USB drive). Preferably, mounting the second device interface as a virtual mass storage device transparently provides the configuration data of the signed data container via the second device interface to the controller device. Thus, the controller device receives the copy of the configuration data without requiring any modification to the controller device.

Preferably, the method further comprises transferring the copy of the configuration data to the controller device via the second device interface. Transferring the copy of the configuration data to the at least one controller device via the second device interface transmits the verified copy of the configuration data. An advantage is that only the copy of the configuration data is transmitted, no transmitting of the configuration data as received via the first device interface is possible. This improves the security of the controller device, since the configuration data may not be directly transmitted to the controller device. Further, only the verified copy is transmitted to the controller device. Transmitting the copy of the configuration data via the second interface to the controller device can be understood as transmitting the configuration data from a trusted environment to the at least one controller device which improves the security of transmitting the configuration data to the at least one controller device. According to another aspect, a computer program product is provided. The computer program product may comprise computer readable instructions which may be stored on a computer-readable medium or provided as a data signal, such that when the instructions are loaded and executed on a device, such as the data transfer device, the instructions cause the device to perform operations according to the method according to the present invention, particularly according to one of the preferred embodiment described herein.

According to yet another aspect, the present invention provides a device, such as a data transfer device for transferring configuration data for controller devices. The data transfer device comprises:
a first device interface, which is adapted to receive a removable storage medium;
a storage container for storing a copy of the configuration data;
a harmful code repository comprising a plurality of predefined data signatures;
a second device interface connectable to the at least one controller device; and
a processing unit which is adapted to carry out executable instructions to perform the following steps:
   receive a first certificate via the first device interface;
   receive a signed data container via the first device interface, the signed data container comprising configuration data for at least one controller device;
   verify the signed data container using the first certificate;
   if the signed data container is verified successfully:
      - store a copy of the configuration data for the at least one controller device in the storage container;
      - detect whether at least one of the predefined data signatures is included in the copy of the configuration data for the at least one controller device; and,
   if no predefined data signature is detected:
      - activate the second device interface to allow access to the copy of the configuration data via the second device interface.

The configuration data may be understood as any kind of data (e.g. configuration parameters) and programs (e.g. commands, source code or compiled code of programs, modules of programs, libraries) of controller devices which is required to perform operations of controller devices in industrial systems.

The data transfer device may be implemented using common industry bodies (e.g. DIN rail body).

Preferably, the first device interface comprises at least one USB connector. Preferably, the second device interface comprises at least one of USB connectors, RS 232 connectors, and RS 485 connectors.

Preferably, the data transfer device provides common physical and/or virtual interfaces and the corresponding connectors in order to be able to connect removable storage devices using an USB connector to different common serial connectors in industry systems. Preferably, the data transfer device is able to provide data transfer between different physical connectors and protocols (e.g. an USB connector at the first interface to an RS232 connector at the second interface).

Preferably, the data transfer device adapted to carry out the method according to the present invention, particularly according to one of the preferred embodiment described herein. Moreover, for the details of preferred implementations of individual components of the data transfer device, reference is also made to the description of the method according to the invention.

### Brief Description of the Figures

- **Fig. 1**: schematically illustrates a conventional data transfer to a controller device;
- **Fig. 2**: schematically illustrates a method of transferring configuration data for at least one controller device according to a preferred embodiment of the present invention;
- **Fig. 3**: shows an initialisation of a data transfer device according to a preferred embodiment of the present invention;
- **Fig. 4**: presents an exemplary data transfer to a controller device according to a preferred embodiment of the present invention;
- **Fig. 5**: presents an exemplary data transfer to a controller device in combination with an exemplary update of a data transfer device according to a preferred embodiment of the present invention;
- **Fig. 6**: depicts an exemplary data structure of a main data container received by a data transfer device according to a preferred embodiment of the present invention;
- **Fig. 7**: shows an exemplary process diagram of a method according to a preferred embodiment of the present invention; and
- **Fig. 8**: presents an exemplary component diagram of a data transfer device according to a preferred embodiment of the present invention.

### Detailed Description

In the following text, a detailed description of examples will be given with reference to the drawings. It should be understood that various modifications to the examples may be made. In particular, elements of one example may be combined and used in other examples to form new examples.

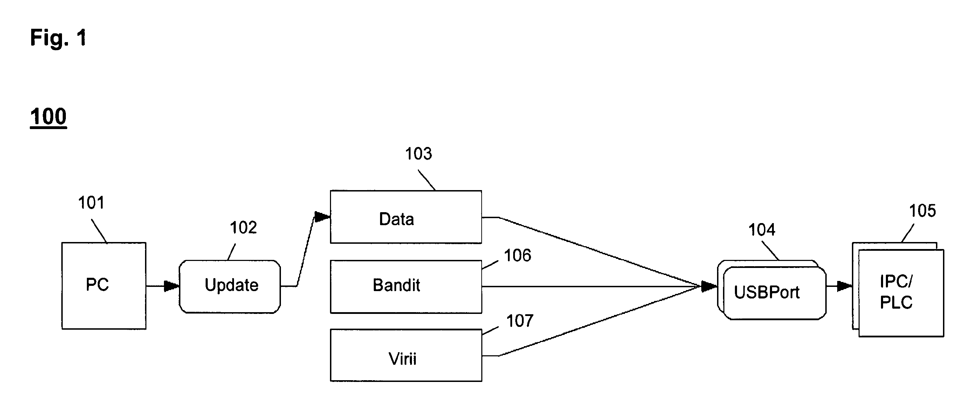

**Fig. 1** schematically illustrates a conventional data transfer to a controller device 105. The involved components together may form an exemplary data transfer system 100. A personal computer or process computer 101 may prepare an update 102 to transfer configuration data via one or more universal serial bus ports 104 to one or more controller devices 105 (e.g. industrial personal computer (IPC), programmable logic controller (PLC)). Preparing an update 101 may involve copying the update 102 including data for one or more controller devices to a removable and/or mobile storage medium (e.g. USB drive) and, preferably, loading the data from the removable storage medium via the one or more USB ports 104 on the one or more controller devices 105. The removable storage medium may be a valid removable storage medium 103 if the removable storage medium includes only the data for the one or more controller devices without any malicious or harmful code and/or data for the one or more controller devices 102. The valid removable storage medium 103 may be connected to the one or more controller devices 105 via the USB port 104 of the controller devices 105 in order to enable the controller device 105 to receive the data from the valid removable storage medium 103.

In addition, the one or more controller devices 105 may receive via the one or more USB ports 104 the configuration data from the removable storage medium from insecure external sources. The removable storage medium from an insecure external source (i.e. a bandit removable storage medium 106) may not be valid or permissible for the controller devices. Since the USB port of the controller devices may not be able to detect that the configuration data is received from the bandit removable storage medium 106, insecure data or programs/code may be received via the USB port 104 by the controller devices 105.

In another example, an infected removable storage medium 107 may be connected to the USB port 104 of the controller devices 105. The infected removable storage medium 107 may be understood as a removable storage medium which includes malicious code or data (e.g. viruses, worms, spam, and/or malware). Since controller devices as currently available may not be able to detect the bandit 106 and/or infected 107 removable storage media, the controller devices 105 may be infected and/or brought into an insecure state by connecting the bandit 106 and/or infected 107 removable storage media to the controller devices 105.

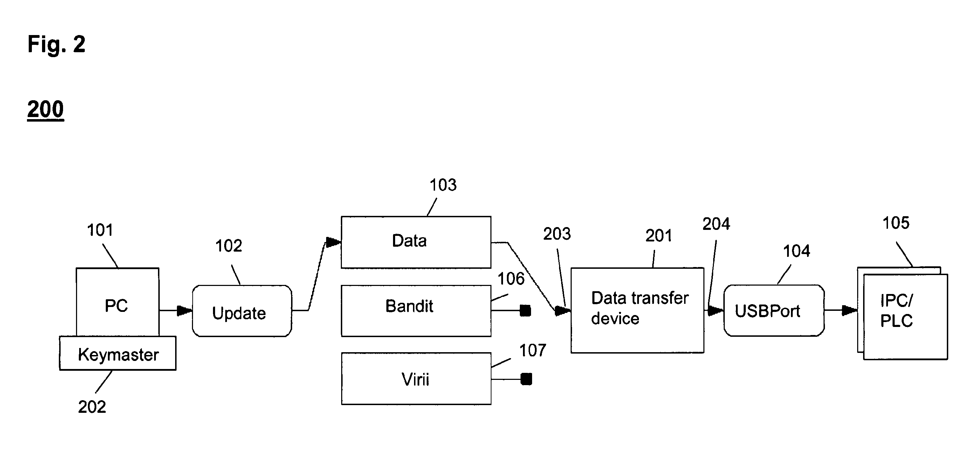

**Fig. 2** schematically illustrates a method of transferring configuration data for at least one controller device according to a preferred embodiment of the present invention. The involved components together may be considered as an exemplary data transfer system 200. A data transfer device 201 according to a preferred embodiment of the present invention comprises a first device interface 203 and a second device interface 204. Further, the data transfer device 201 may be physically connected to the controller device 105 (e.g. the data transfer device 201 may be physically connected to the USB port of the controller device 105) via the second device interface 204. The data transfer device 201 may protect the controller device 105 from malicious code (e.g. viruses, worms) transferred via a USB port (e.g. the second device interface 204) to the controller device 105. The data transfer device 201 may be implemented as a computer on module or a system on a chip with a CE marking in a DIN rail body. The DIN rail body may comprise a metal rail of a standard type widely used for mounting circuit breakers and industrial control equipment inside equipment racks.

The data transfer device 201 is adapted to detect the bandit and infected removable storage media 106, 107, and prevents the bandit and infected removable storage media 106, 107 from accessing the controller device 105. Thus, the data transfer device 201 protects from unknown and/or insecure removable storage media (e.g. USB drives). Preferably, the data transfer device 201 uses digital signatures to prevent manipulation of the data transfer device 201 itself and it prevents processing of manipulated data within the data transfer device 201.

A key master program 202 running on a a process computer 101 (e.g. key master computer) may sign the update in order to enable the identification of the update at the data transfer device 201. The data transfer device 201 may comprise an operating system. The integrity of the operating system may be checked when booting the operating system. If an error occurs when checking the operating system, access to the controller device is restricted and/or denied. The data of the infected removable storage medium is checked for malicious code or data (e.g. by using a virus or malware scanner) in the controlled environment of the data transfer device 201. Checking the data in the controlled environment of the data transfer device provides the advantage that the checking cannot be circumvented or manipulated. Therefore, only checked data is received via the USB port 104 at the controller device 105.

The operation system of the data transfer device 201 may be further protected against manipulation. Protecting the operation system against manipulation may be understood that the operation system is loaded using a multi-stage bootloader which ensures the integrity of the operation system using digital signatures. The bootloader may be stored in a bootloader storage container (e.g. a storage which may be written only once) which may not be manipulated. If the operation system is updated and the operating system modified, a new signature is loaded to the operating system. The bootloader verifies the signature and denies booting if the signature is not valid. The bootloader may be implemented as a signed bootloader or using a secure boot approach of the Unified Extensible Firmware Interface (UEFI).

The multi-stage bootloader of the data transfer device 201 comprises at least two stages, stage 1 and stage 2.

At stage 1 of the multi-stage bootloader, a boot program or boot programs may be booted from a read-only memory (ROM). The starting address of the bootloader or boot program may be specified via hardware. Stage 1 of the multi-stage bootloader checks the integrity of the code of stage 2 of the multi-stage bootloader. The checking of the integrity may be carried out using a checksum stored in the ROM of the data transfer device. Since the checksum is stored in the ROM, no later manipulation of the checksum is possible. Preferably, each manipulation at stage 2 is detected at once and the data transfer device is switched off if a manipulation of the operation system is detected. If the checksum of stage 2 is correct, stage 2 is executed. Stage 1 of the boot loader may be as small as possible. All-in-all 60 to 70 Byte ROM may only be available for storing the boot programs and the checksum in the ROM. Secure hashing algorithms (e.g. SHA-0, SHA-1, SHA-256, SHA 512, GOST, MD4, or MD5) are preferably used. The digest size of secure hashing algorithms may be dependent on the concrete algorithm and configuration. The digest size may be between 128 and 1216 bits.

Stage 2 of the multistage bootloader may include program code stored in a rewritable storage space (e.g. a flash storage). Compared to stage 1, the storage space of stage 2 may be larger which enables the use of cryptographic algorithms like x.509 or other public key algorithms (e.g. Diffie-Hellman, elGamal). Stage 2 creates a cryptographic hash of the kernel to be loaded. The kernel may be signed with a private key of a manufacturer certificate. Thus, stage 2 is able to check whether the kernel is issued by the manufacturer of the data transfer device. If the kernel has been manipulated, the checksum is invalid. If the checksum has been manipulated, the signature detects the manipulation of the checksum. For creating the signature, the private key of the manufacturer certificate is used. For implementing stage 2 of the bootloader, the bootloader U-Boot may be used. In addition to the kernel, the file system of the data transfer device is also checked to detect manipulations of the file system. If manipulations of the file system are detected, the bootloader stops booting the data transfer device 201.

If the data transfer device 201 supports UEFI, the bootloader of stage 1 is implemented in hardware. In this embodiment, only the checksum of stage 2 has to be stored in the boot loader of stage 1.

Alternatively, stage 1 of the bootloader may be implemented in a writable memory. Stage 1 may be stored in a writable memory (e.g. Flash memory), if the hardware does not include a ROM or includes a ROM with low capacity. When implementing stage 1 in the writable memory, stage 1 creates a checksum of itself and stage 2. This checksum may be checked using a cryptographic method. The signature may be stored in the ROM.

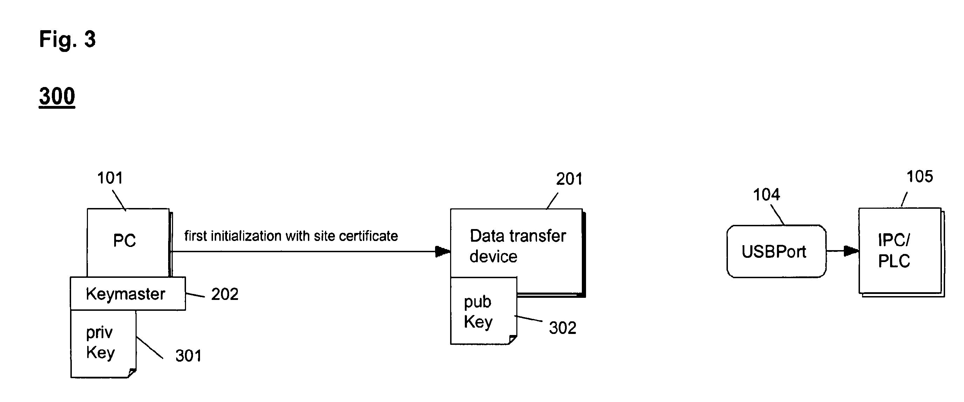

**Fig. 3** shows an initialisation of a data transfer device 201 according to a preferred embodiment of the present invention. In particular, it may be understood as a first time initialisation of the data transfer device 201. The first time initialisation of the data transfer device 201 may be carried out only once in order to prevent manipulation of the data transfer device 201. For first time initialisation, a public-private key pair for a site is created. The private key 301 may be stored within the key master program 202 of the process computer 101. The public key may be stored in a site certificate (i.e. a public key certificate which includes the public key of the site). The key master program 202 may be understood as a software program to write data on a removable storage medium for distributing data, programs and updates. The key master program 202 may be further understood as a software program to read log files and/or access protocols (e.g. log files) from the removable storage medium. Preferably, the key master program may be used to approve the data stored on the removable storage medium to be processed by the data transfer device 201.

The public key 302 included in a site certificate may be transferred to the data transfer device 201. The transfer may be performed by connecting the process computer 101 to the data transfer device 201. Alternatively, the removable storage medium (e.g. USB drive) may be used to transfer the site certificate to the data transfer device 201. The site certificate may be implemented using the x.509 standard. The site certificate may be used to identify the customer which operates the data transfer device 201.

Preferably, the site certificate is used to detect valid and non-valid data being received at the data transfer device 201. Further certificates (e.g. a first certificate or a user certificate) may be derived from the site certificate in order to create a chain-of-trust. The chain-of-trust is an approach for trust delegation comprising an ordered list of certificates that enables the receiver (e.g. the data transfer device 201) to verify that the sender certificate (e.g. the site certificate or the user certificate) and all intermediate certificates are trustworthy. The site certificate 302 may be trusted entirely. Using the site certificate, a user certificate or a first certificate may be signed. Preferably, the chain-of-trust is implemented using the x.509 standard. The user certificate may specify which data container or update package the user is allowed to sign. The information which data container the user may sign may be included in the common name (CN) of an x.509 certificate.

The site certificate may be used to sign and encrypt the data container for the data transfer device 201. Using the site certificate, a signed data container may be transferred to all controller devices of the site. The right of transferring signed data container may be controlled in a fine-grained manner with user certificates. A user certificate is signed with the site certificate. In a field (e.g. common name or extension attributes) of the user certificate, the data transfer devices are specified to which signed data container may be transferred. If a signed data container is created, the user certificate is copied to the removable storage medium including the signed data container. Copying the user certificate to the removable storage medium enables the data transfer device to verify whether the user certificate is valid by using the public key of the user certificate and verifying the signature of the user certificate using the public key of the site certificate. Further, the data transfer device is enabled to verify the signature of the signed data container and whether the data included in the data container are allowed to be transferred to the data transfer device 201. Advantageously, access to the data transfer device 201 may be efficiently restricted using the user certificate. Only a data container for the data transfer device specified in the user certificate may be copied to the data transfer device 201. Further, the use of user certificates simplifies the revocation of access and the change of access rights to the data transfer device 201.

Optionally, the first initialisation may be performed more than once. If the first initialisation is performed a second time, the first initialisation may have to be authorised by the manufacturer of the data transfer device. The manufacturer may have to sign an update package for the first initialisation of the data transfer device with the manufacturer certificate in order to enable the first initialisation the second time. Further, the data transfer device may require a user authentication before transferring the site certificate to the data transfer device.

When initialising the data transfer device the first time, several data items may be initialised. The data items may be initialised by either using a USB drive or connecting the data transfer device to an USB port of the key master computer or process computer. The following data items are exchanged between the key master computer and the data transfer device: the site certificate, the unique identifier of the data transfer device 201, and the revocation control list of site certificates.

The site certificate may be loaded on the data transfer device 201. The site certificate is used to carry out any communication with the data transfer device 201. The site certificate is also required to perform updates issued by the manufacturer of the security controller device. No updates from the manufacturer may be sent to the data transfer device without signing the update using the site certificate (i.e. approving the update by the site or a user of the site). This prevents a site (e.g. a customer) from loading updates from another site (e.g. another customer) having a different certificate, since only correctly signed data container may be loaded to the data transfer device. From the site certificate, only the public key of the site certificate may be required. The site certificate may be stored in CER and DER format and transferred to the data transfer device 201.

Optionally, encrypted communication may be initialised. For initialising encrypted communication, a communication certificate (e.g. private/public key pair) may be created on the data transfer device. The public key of the communication certificate may be transferred to the key master software. The key master software uses the public key to encrypt the signed data container to the data transfer device. The communication certificate may be created on the data transfer device to prevent the private key of the communication certificate from being stored outside the data transfer device. This approach increases the security of the used encryption method. Using encrypted communication, it may be possible to create the signed data container for only one single data transfer device, since only the data transfer device comprising the private key of the communication certificate is able to decrypt the signed data container. The signed and encrypted data container may not be decrypted by malicious third parties, if the removable medium storing the signed and encrypted data container is lost or stolen. Since only the public key of the communication certificate may be transferred, the certificate is stored in CER or DER format.

Preferably, the following process steps are carried out when connecting the data transfer device via the USB connector to the process computer 101 running the key master software 202. Connect the data transfer device with power which causes the data transfer device to boot. During booting, check whether the first initialisation is already carried out. If the first initialisation is already carried out, switch the data transfer device in the normal operation mode (e.g. the data transfer device accepts USB drives including a signed data container.

If no first installation of the data transfer device has been performed before, the communication certificate for the data transfer device may be created and the data transfer device may be connected to the process computer running the key master software. Preferably, the data transfer device is connected as a mass storage device to the process computer. The site certificate may be transferred to the data transfer device and stored in a certificate storage container (e.g. a virtual mass storage device of the data transfer device mounted as a virtual mass storage drive on the process computer) on the data transfer device. The unique identifier of the data transfer device may be transferred to the data transfer device.

Afterwards the virtual mass storage device may be unmounted by the key master software and the data transfer device may be informed that the virtual mass storage device is unmounted. The data transfer device stores the site certificate and whether the first initialisation is successfully carried out (e.g. by setting a flag). If the first initialisation is carried out successfully, no further first initialisation may be carried out by the customer without involving the manufacturer of the data transfer device. After rebooting the data transfer device, the data transfer device operates in normal mode. The normal mode may be understood as the data transfer device being able to receive data from a first device interface and the data transfer device being able to transfer the data via a second interface to the controller device.

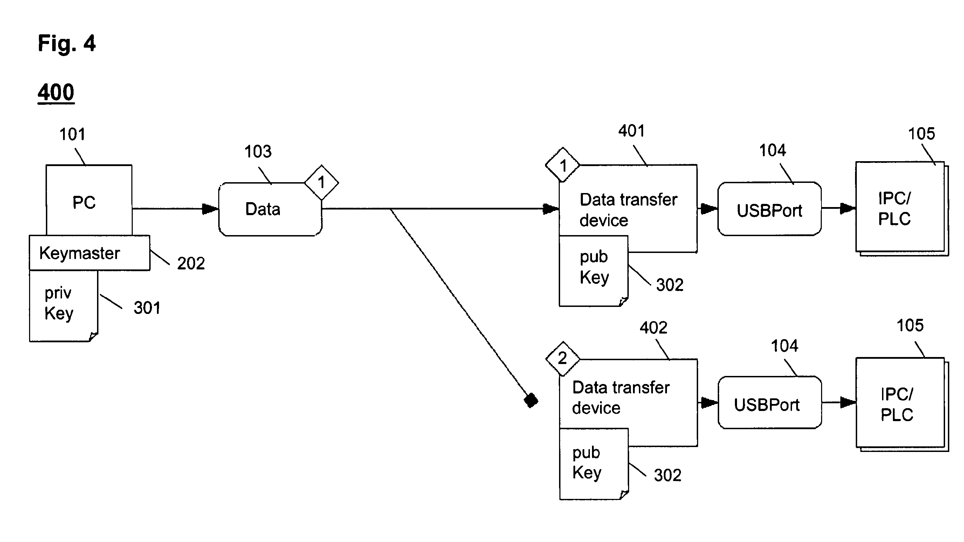

**Fig. 4** presents an exemplary data transfer to a controller device 105 according to a preferred embodiment of the present invention. If data 103 has to be transferred to the controller device 105, the data may have to be signed by the site certificate with the key master program 202. The signed data may include an identifier of the user which executed the signing of the data. The identifier of the user may be understood as the user certificate derived from the site certificate. The signed data may be understood as a signed data container including the data. An advantage of signing the data is that the data 103 cannot be manipulated without modifying the signature of the data 103. Thus, signing the data 103 using the private key 301 prevents from manipulating the data 103 and, in particular, the data container including the data 103.

As shown in the preferred embodiment of Fig. 4, the data 103 is approved for a first data transfer device 401. The first data transfer device may verify the signature. If the signature may be verified successfully by the first data transfer device, the data 103 is transferred via the USB port 104 to the controller device 105. At a second data transfer device 402, it may be detected that data is not approved for the second data transfer device 402 and/or the controller device 105 connected to the second data transfer device 402. The data 103 may not be processed at the second data transfer device and/or transferred to the controller device 105 connected via a USB port to the second data transfer device 402. Advantageously, the USB port of the controller device 105 is protected from data which is not approved for the second data transfer device 402 and/or the controller device 105.

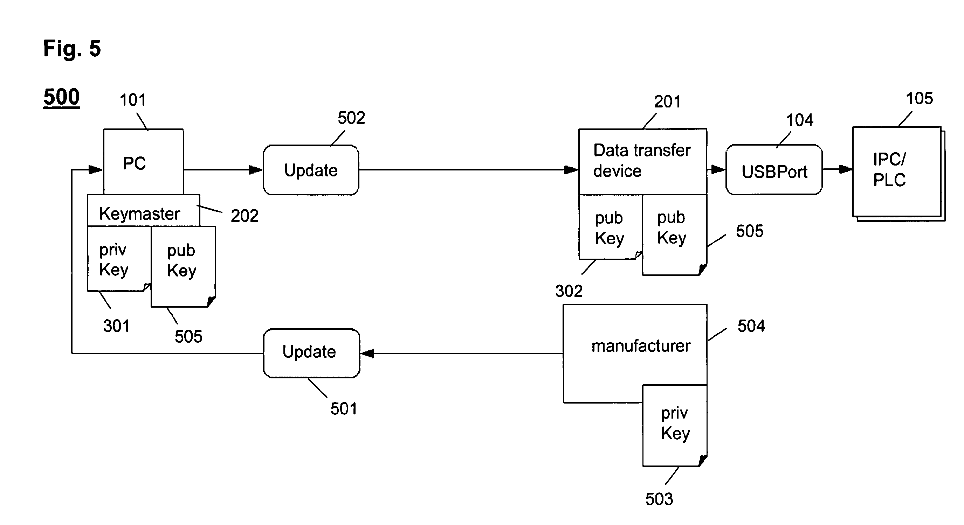

**Fig. 5** present an exemplary data transfer to the controller device 105 including an update 501, 502 of the data transfer device 201 according to a preferred embodiment of the present invention. Updates 501, 502 (e.g. update 501 from a manufacturer 504 including a public key 505 of the manufacturer or a manufacturer certificate, update 502 to the data transfer device 201 including the update from the manufacturer 504) of the data transfer device 201 may be carried out with a similar approach as present with Fig. 4. The manufacturer certificate may be transferred to the data transfer device 201 when producing the data transfer device 201 by the manufacturer. In particular, updates 501, 502 of the data transfer device 201 (e.g. operating system updates, updates of virus definitions) may be signed with a private key 503 of a manufacturer 504 of the data transfer device 201. In addition, update 502 may be signed with the site certificate. When receiving the update 502, the data transfer device 201 may first verify a first signature of the update 502 using the public key 302 included in the site certificate, and, second, may verify a second signature of the update 502 using the public key included in the manufacturer certificate. Only if both, the manufacturer certificate and the site certificate are accepted, the update 502 is carried out at the data transfer device. The update 502 may receive full access to the data transfer device. The update 501 which is not signed by the private key of the site certificate is not accepted by the data transfer device. Advantageously, by additionally signing the update with the site certificate, losing the site certificate may be prevented. Updates of the harmful code repository may be provided as operation system updates. An advantage of providing updates of the harmful code repository as operation system updates is that only one update process for manufacturer updates may be required which simplifies the updates of the data transfer device.

### Processing of payload container and/or updates (e.g. operating system updates) from the manufacturer of the data transfer device

All payload container and/or updates from the manufacturer of the data transfer device are signed by the manufacturer. For signing the updates, a sub-certificate of the manufacturer certificate may be used. Advantageously, using a sub-certificate may simplify certificate revocation. The updates of the manufacturer may be distributed via the homepage of the manufacturer, by downloading the updates into the key master software or by sending the updates of the manufacturer on storage media to the customer of the data transfer device. When distributing the updates, the updates may be encrypted using the site certificate. After downloading the updates, the customer may approve the updates. Approving the updates enables the customer of the data transfer device to control which updates should be performed on the data transfer device.

A removable storage device may be created including the updates from the manufacturer and/or the configuration data transferred to the controller device. The updates are signed with the site certificate of the customer. The data transfer device accepts only updates of the manufacturer if the updates of the manufacturer are approved by the customer.

### Process of encryption between key master software and data transfer device

The key master software may store the site certificate. Optionally, the key master software may store, for each data transfer device, a further certificate which may be used for encrypted communication with the corresponding data transfer device. If user certificates derived from the site certificate are used, the data to be transferred to the controller devices is signed with the user certificate of the user authenticated to the key master software. The user certificate may comprise information for which data transfer devices, the user may be allowed to sign the data container.

Preferably, the following process steps are carried out by the key master software for creating a signed data container on a removable storage medium:
● Select a removable storage medium connected to the key master software;
● Create a data container and/or update container using the key master software;
● Select a target data transfer device (which is understood as the data transfer device identified by the target identifier);
● Create metadata for the data container; the metadata may comprise information regarding at which time, which user approved the configuration data for which data transfer device;
● Add a certificate revocation list to the data container;
● Add the current version of the harmful code repository to the data container as a payload data container;
● Encrypt the data container using the public key of the data transfer device (optionally, encrypting the data container with each of the public keys of the data transfer devices);
● Sign the encrypted data container using the private key of the site certificate and/or user certificate (optionally, copy the public key of the site and/or user certificate into a main container of the removable storage medium);
● Copy the signed data container to the removable storage medium;
● Unmount the removable storage medium and transfer/deliver the removable storage medium to the data transfer device.

Preferably, upon connecting the removable storage medium, the following steps may be carried out by the data transfer device, preferably automatically:
● Mount the data system (e.g. vFAT, e(x)FAT, NTFS) of the removable storage medium;
● Search the user certificate;
● If the user certificate is found, the user certificate is used for verifying the signature of the signed data container;
● Verify the signature (i.e. verifying if the user certificate is signed by the site certificate and/or checking whether the user is allowed to use the data transfer device)
● Search for the signed data container;
● If no signed data container is found, terminate the process and, preferably, display the error using e.g. an LED of the data transfer device to the user;
● Verify the signature of the signed data container;
● If the signature is not correct, terminate the process and, preferably, display the error using e.g. an LED of the data transfer device to the user;
● Create a storage container on a local storage medium of the data transfer device;
● Encrypt the storage container by a temporary password or an one-time-password and store the one-time-password in the volatile memory (e.g. random access memory (RAM)) of the data transfer device; in case of electrical power outage, the data container may not be advantageously be decrypted any more.
● Copy the data container into the encrypted storage container;
● Decrypt the data container using the private key of the data transfer device;
● Check whether the data container is complete (i.e. check whether the required data for processing operating system updates or configuration data is included in the data container)
● Check the metadata whether the data container is approved for the current data transfer device;
● Merge the certificate revocation list of the data container with the local certificate revocation list of the data transfer device (i.e. the union of both certificate lists is taken as the new certificate revocation list)
● In case an error occurs in any of the previous processing steps, the process terminates and, most preferably, the error is indicted to the user;
● Install the update of the harmful code repository.

The processing of operating system updates may comprise the installation of the operating system update and the writing of checksums for the data system which are delivered with the operating system update. The checksums of the data system may provide the necessary checksums for the boot loader to check the integrity of the operating system. The processing of the configuration data may comprise, checking the configuration data for data signatures included in the harmful code repository, writing the metadata in a log file or log repository, initializing a virtual data storage medium at a USB device port. The processing of the configuration data may further comprise the controller device detecting the virtual mass storage device and reading the configuration data from the virtual mass storage device.

The processing of all data (e.g. operating system updates, configuration data, metadata) included in the data container comprises writing feedback information to the removable storage medium connected to the data transfer device. The feedback information may be encrypted and signed by the data transfer device. The feedback information (e.g. action or tasks performed by the data transfer device, information regarding whether a cable and/or a device is disconnected from the data transfer device, monitoring information, alert information) may be stored in a rotating log file in the key master software. Storing the feedback information in the key master software may enable forensic analysis of the tasks or action performed by the key master software.

If the processing ends successfully, the user receives response (e.g. an LED of the data transfer device is activated) when the removable storage device may be removed from the data transfer device. The feedback information may be read by the key master software.

Required data of a data container may comprise the certificate revocation list, the current version the harmful code repository, the metadata and the configuration data. Required data of an operation system update may comprise the certificate revocation list, the current version of the harmful code repository (e.g. the current version of virus definitions), the metadata, and the operation system update including the valid signature of the manufacturer.

### Using additional hardware to authenticate users of the data transfer device

The security of the data transfer device depends on the trustworthiness of the certificates of the customer. If the certificates of the customers are stolen, revocation of the certificates using the certificate revocation control list may be possible. To further improve the security, the certificates may be stored on an external device (e.g. a smart card). Storing the certificates on a smart card may prevent stealing the certificate, since no certificate may have to be stored on the process computer running the key master software. Alternatively or optionally, the user certificates may be stored and managed at a directory service (e.g. an active directory service). Storing the user certificates at the directory service may further improve the security of the system since the certificate may not be stored in the key master software.

### Using certificates for encrypted communication between the key master software and the data transfer device

For establishing encrypted communication between the key master software and the data transfer device the following certificates may be required:
● Site certificate: The site certificate is installed with the first installation and is used to identify the customer at the data transfer device. For encrypted communication, the private part of the site certificate may be used to encrypt the feedback information from the data transfer device to the key master software.
● User certificate: The public part of the certificate determines for which data transfer devices updates and configuration data included in the data container may be approved. The user certificate is signed with the site certificate. Thus, the data transfer device may verify the user certificate without transferring the user certificate to the data transfer device in advance. For encrypted communication, the user certificate may be used as an alternative to the site certificate.
● Communication certificate of the data transfer device: Each data transfer device stores the public part of the communication certificate at the key master software. Using the certificate of the data transfer device, signed feedback information from the data transfer device may be identified by the key master software.

The feedback communication channel may be used to inform the key master software at which time, which user, which data or software may be installed at the data transfer device or at the controller device. The feedback information may be indicated using either information stored on the removable storage device (e.g. USB drive) or using an Ethernet connection. When using USB drives, the status of the data transfer device and the log file is stored on the USB stick. The feedback information may be signed with the private key of the data transfer device and encrypted with the public key of the site certificate. If the USB drive is connected to the key master software, the logs files are automatically transferred to the key master software and the log file is stored by the key master software. Advantageously, this enables an analysis of the state of the data transfer device using the key master software. When using an Ethernet for receiving feedback information, the log information is transferred via Ethernet to the key master software. The feedback information is transferred using broadcasts and/or UDP packets, which are signed and encrypted accordingly. The feedback information may comprise a heart beat (e.g. by periodically sending a UDP packet). Preferably, the heart beat may be used to identify whether the data transfer device has a valid state (e.g. the data transfer device is working properly and no error is detected at the data transfer device). Since the data transfer device is not able to receive data from the network, responses to the received broadcast and/or UDP packets may not be possible.

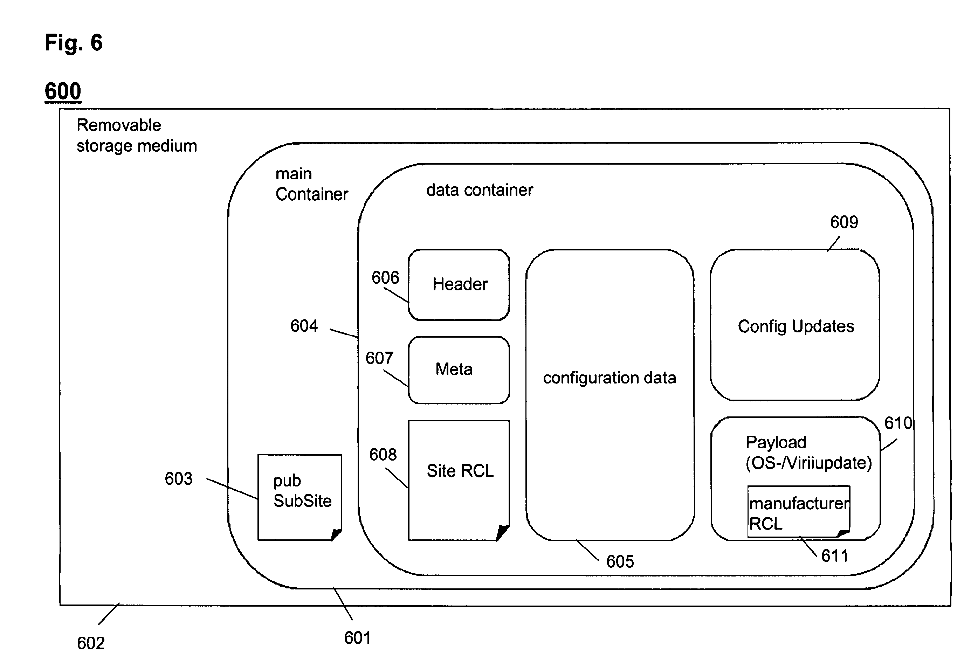

**Fig. 6** depicts an exemplary data structure of a main container 601 stored on the removable storage medium 602 received by the data transfer device in a data transfer method according to a preferred embodiment of the present invention. The removable storage medium 602 is a physical storage device (e.g. USB drive, SD card, CD) which is able to store the data which is received at the data transfer device. The main container includes all data required for performing the processing steps at the data transfer device. In particular, the main container may comprise the public key 603 of the user certificate and/or the signed data container 604. The public key 603 may be the public key which is used to sign the signed data container 604. The removable storage device 602 may comprise one or more main container 601. The signed data container 604 may include all necessary data for transferring the configuration data 605 to the at least one controller device. In particular, the signed data container may comprise:
● a header 606 which is used to identify the signed data container (e.g. the header may comprise a version number which may be used to modify the processing of the data transfer device depending on the version number included in the header of the signed data container),
● metadata 607, which may include the target identifier of the target data transfer device,
● a revocation control list 608 of site certificates which is used to update the revocation control list of the data transfer device,
● the configuration data 605, which may comprise programs, system updates or other data of the at least one controller device,
● a configuration update 609, which includes updates (e.g. a list of users and/or user certificates which are allowed to access the data transfer device) of the configuration of the data transfer device,
● a payload container 610, which comprises data (e.g. operating system updates, programs, configuration updates, updates of the harmful code repository) from the manufacturer of the data transfer device,
● a revocation control list 611 of manufacturer certificates, which comprise revoked certificates of the manufacturer of the data transfer device.

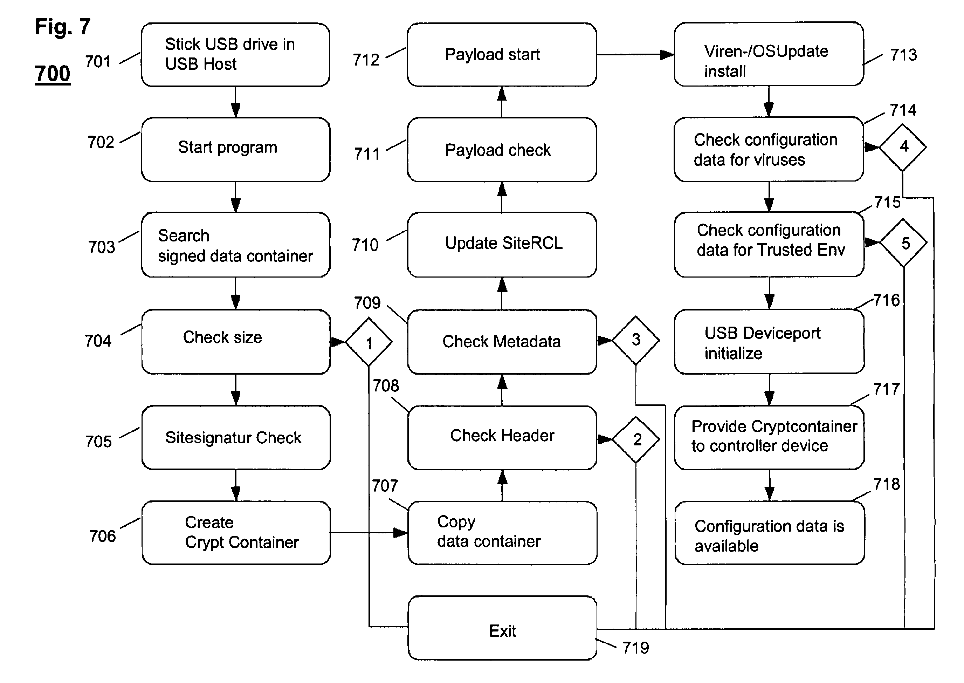

**Fig. 7** shows exemplary processing steps 700 of the data transfer device according to a preferred embodiment of the present invention. Preferably, the processing steps 700 are carried out by the data transfer device upon connecting (step 701) the removable storage medium via the first device interface (e.g. a USB host port) to the data transfer device. Connecting the removable storage medium to the data transfer device triggers an event which starts (step 702) a processing program to carry out the processing steps at the data transfer device. On the connected removable storage medium, a signed data container is searched (step 703). The size of the signed data container is checked (step 704) on the removable storage medium. If the size of the signed data container may be too large, the process is aborted and an error reported. Next, the signature of the signed data container may be verified (step 705) if the signed data container is not encrypted. If the signed data container is encrypted, the signed data container may be decrypted using the private key of the communication certificate of the data transfer device. If the data container is signed with the site certificate, the signature may be verified using the site certificate (e.g. public part of the site certificate). If the data container is signed with the user certificate derived from the site certificate, the signature of the data container may be verified using the user certificate and the site certificate as previously described.

Next, an encrypted storage container may be created (step 706) with a random one-time password. The encrypted storage container may be stored on a non-volatile memory (e.g. flash memory) and/or a volatile memory (e.g. random-access memory). The random one-time password may be stored on a volatile memory. The configuration data which is to be transferred from the data transfer device to the controller device may have to the stored in a storage container for detecting malicious code. The stored configuration data may include confidential data which has to be protected. Depending in the type of storage used for storing the configuration data, a reliable and secure deletion of the stored configuration data may not be guaranteed. An advantage of storing the password in the volatile memory is that rebooting the data transfer device leads to a newly generated password. Thus, the container may not be accessed anymore and the confidential data contained in the container may be protected. The encrypted storage container may be implemented using crypt-container of the Linux operating system. At each data transfer a new encrypted container is created with a new random one-time password. If the data transfer device is stolen and/or the power of the data transfer device unplugged, the password of the stored configuration data may be destroyed and the configuration data stored in the data container is protected.

Next, the signed data container may be copied (step 707) into the encrypted storage container of the data transfer device.

Preferably, the header included in the signed data container may be checked (step 708). In particular, it may be checked which version number is specified in the header. Depending on the version number, further processing steps may ce carried out. Checking the version number may enable further upgrades of the data transfer device using different processing steps. Next the metadata of the signed data container may be checked (step 709) whether the target identifier included in the metadata equals to the unique identifier of the data transfer device. If the target identifier is not equal to the unique identifier of the data transfer device, the signed data container may not be addressed for the data transfer device. If the signed data container is not addressed for the data transfer device, the process is preferably aborted (step 719) and, most preferably, an error is reported. Further, the encrypted storage container may be closed and/or unmounted and the random one-time-password may be overwritten.

Next, the revocation control list of site certificates may be updated (step 710) with an updated revocation control list of site certificates if the updated revocation control list of site certificates is included in the signed data container. It is further checked (step 711) whether the payload container is included in the signed data container. If the payload container is included in the signed data container, the signature of the payload container is checked using the manufacturer certificate. If the signature of the payload container is successfully checked, the updates (e.g. operating system updates, updates of the harmful code repository) included in the payload container may be started and/or loaded into the data transfer device (step 712). The updates may be started as a root user and may change the user identifier during execution of the updates. Starting the updates included in the payload container may install operating system updates and updates of the harmful code repository (e.g. predefined data signature updates, virus updates) on the data transfer device (step 713).

Furthermore, it is detected whether the at least one of the predefined data signatures is included in the copy of the configuration data of the signed data container (step 714). If one or more of the predefined data signatures are detected in the copy of the configuration data of the data container, the encrypted storage container may be closed and the random one-time password overwritten. Further, the process may abort. The detection rate of detecting predefined data signature of the harmful code repository depends on the definition of the predefined data signatures. In order to improve the detection rate, only the source code of programs may be transferred to the data transfer device. The data transfer device may compile the source code of the programs to assure the integrity of the compiled programs. Since the data transfer device comprises a trusted environment which may not be able to manipulate, compiling the source code would be performed in the trusted environment. Malicious code which attacks only compiled code of programs may not work anymore, since the program is compiled at the data transfer device.

Next, the configuration data may be tested (step 715) in the trusted environment of the data transfer device (e.g. verifying the signature of signed data and/or data container, verifying the checksum of libraries and data with reference checksums stored on the data transfer device, code analysis). If the testing of the configuration data fails, the encrypted storage container may be closed and the random one-time password may be overwritten. Testing may comprise testing of configuration data with respect to malicious code and false configurations, testing of modifications to programs, compiling source code of programs to be transferred to the controller device, validating checksums, and/or executing code analysis.

Finally, the checked and tested configuration data may be provided to the controller device. To provide the checked and tested configuration data to the controller device, the data transfer device may announce or activate a virtual mass storage device via a second device interface of the data transfer to the controller device (step 716). Activating the virtual mass storage device may include mounting the encrypted storage container (step 717) including the configuration data as a virtual mass storage device (e.g. as a virtual USB device port). The checked and tested configuration data may be available via the virtual mass storage device to the controller device (step 718).

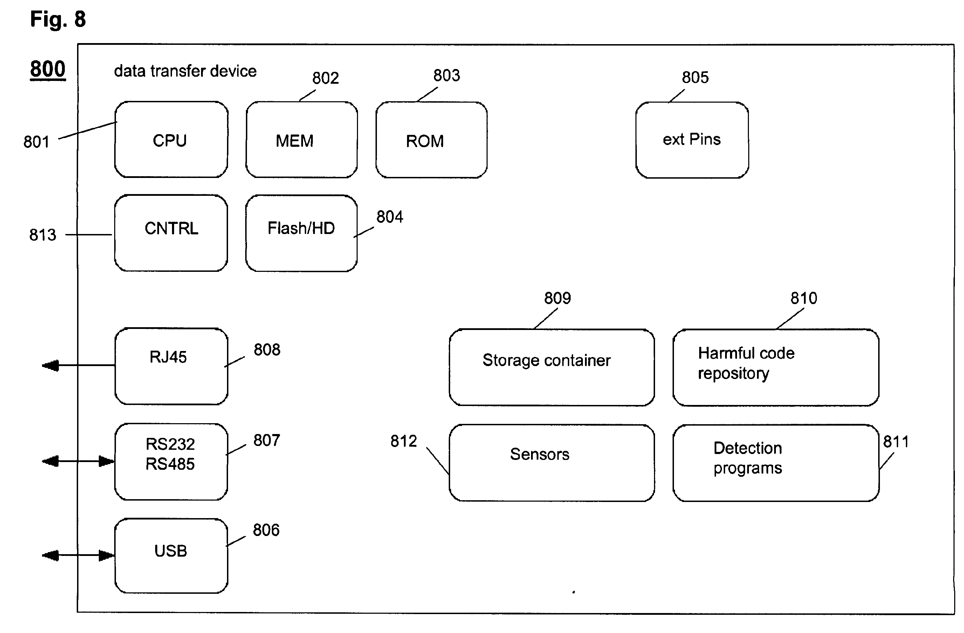

**Fig. 8** presents an exemplary component diagram of a data transfer device 800 according to a preferred embodiment. Preferably, the data transfer device 800 may comprise a central processing unit 801 for performing the processing steps of the data transfer device 800, a volatile memory 802, a read only memory (ROM) 803, a non volatile memory 804 (e.g. flash memory or hard disc), and one or more controllers 813 (e.g. flash memory controller, USB controller).

The data transfer device 800 may comprise a power connector 805. The supply of power for the power connector 805 may be direct current (DC). It may be that no power supply is integrated in the data transfer device 800. Direct current between 12 and 60 V may be used by the data transfer device 800. The direct current may be transformed to 5 V internally. Such direct currents may be available in control cabinets including the controller devices.

The data transfer device 800 may comprise a USB connector 806 for controlling communication via a first and a second device interface of the data transfer device. The USB connector 806 may act as a USB host connector for controlling communication via the first device interface and used for exchanging data via USB drives. The data transfer device 800 may have one or more serial connectors 807, i.e. an RS 232 connector and/or an RS485 connector as first and/or second device interfaces. The one or more serial connectors 807 acting as the second device interface may be used to connect an industrial computer (IPC) or a programmable logic controller (PLC). Further the data transfer device may include a RJ45 connector 808 which is able to transmit data only (e.g. R/S firewall, receive lines may be physically disconnected). The RJ45 connector may be used to transfer monitoring data of the data transfer device and/or may be used to transmit alarm information when the data transfer device is disconnected from the controller device.

In one embodiment, the data transfer device 800 may comprise one or more USB device ports (e.g. second device interfaces). Each of the USB device ports may be connected to a USB host port of the controller devices. If one or more USB device ports are available, one or more controller devices may be connected to the data transfer device 800. It may be that one USB device port is reserved for connecting the data transfer device 800 to the process computer. This reserved port gives the possibility to transfer or load data from the process computer to the data transfer device 800. Using a multiplexer, one or more data transfer devices may be connected to the process computer.

The data transfer device 800 may further comprise a storage container (e.g. a crypt container of the Linux operating system) which may be encrypted. The storage container may store the data (e.g. the configuration data) received via the first device interface from the removable storage medium.

Preferably, the data transfer device may include a harmful code repository 810 comprising predefined data signatures (e.g. definitions and data signatures to detect viruses, worms, malicious code, modifications to programs, and/or false configurations).

The data transfer device may further comprise detection programs 811 (e.g. virus scan software or software to detect malicious code and/or false configurations). Further, the detection programs may be able to detect modifications to source code of the programs to be transferred to the at least one controller device. The detection programs may further be able to compile source code and detecting malicious software based on the compiled source code of the programs.

Preferably, the data transfer device comprises one or more sensors 812, wherein at least one sensor 812 may be connected to the controller device in order to detect whether the data transfer device is connected to the controller device. If the data transfer device is disconnected from the controller device, the sensor may cause the data transfer device to deny working properly (e.g. deny the data transfer device from receiving data via the first device interface and/or deny sending data via the second device interface). The use of sensors may further improve the integrity of the data transfer device, since manipulation of a disconnected data transfer device is prevented.

### List of Reference Numerals

- 101: process computer
- 102: update
- 103: valid removable storage medium
- 104: USB ports
- 105: controller devices
- 106: bandit removable storage medium
- 107: infected removable storage medium
- 201: data transfer device
- 202: key master program
- 203: first device interface
- 204: second device interface
- 301: private key of a public-private key pair for a site
- 302: public key of a public-private key pair for a site (site certificate)
- 401: first data transfer device
- 402: second data transfer device
- 501: update from the manufacturer
- 502: update to the data transfer device
- 503: private key of a manufacturer
- 504: manufacturer
- 505: public key of a manufacturer (manufacturer certificate)
- 601: main container
- 602: removable storage medium
- 603: public key of the user certificate
- 604: signed data container
- 605: configuration data
- 606: header
- 607: metadata
- 608: revocation control list of site certificates
- 609: configuration update
- 610: payload container
- 611: revocation control list of manufacturer certificates
- 701: connect removable storage medium to data transfer device
- 702: start processing program
- 703: search signed data container
- 704: check size of signed data container
- 705: verify signature of signed data container
- 706: create encrypted storage container
- 707: copy signed data container
- 708: check header
- 709: check metadata
- 710: update revocation control list of site certificates
- 711: check for payload container
- 712: load payload container
- 713: update harmful code repository
- 714: detect predefined data signatures in copy of configuration data
- 715: test configuration data
- 716: activate virtual mass storage device
- 717: mount encrypted storage container
- 718: make configuration data available
- 719: abort process
- 801: central processing unit
- 802: volatile memory
- 803: read-only memory
- 804: non-volatile memory
- 805: power connector
- 806: USB connector
- 807: RS232/RS486 connectors
- 808: RJ45 connector
- 809: storage container
- 810: harmful code repository
- 811: detection programs
- 812: sensors
- 813: controller of the data transfer device

## Claims

1. Method for transferring configuration data (605) for controller devices (105), the method comprising:
receiving a first certificate (603) via a first device interface (203),
receiving a signed data container (604) via the first device interface (203), the signed data container (604) comprising configuration data (605) for at least one controller device (105),
providing a harmful code repository (810) comprising a plurality of predefined data signatures,
verifying the signed data container (604) using the first certificate (603),
if the signed data container (604) is verified successfully:
- storing a copy of the configuration data (605) for the at least one controller device (105) in a storage container (809),
- detecting whether at least one of the predefined data signatures is included in the copy of the configuration data (605) for the at least one controller device (105),
if no predefined data signature is detected,
- activating a second device interface (204) connectable to the at least one controller device (105) to allow access to the copy of the configuration data (605) via the second device interface (204).

2. Method of claim 1, further comprising:
receiving, from a key master computer (101), a site certificate and a revocation control list (608) of site certificates,
storing the cite certificate and the revocation control list in a certificate storage,
the method further comprising:
checking the validity of the first certificate (603) comprising:
checking whether the first certificate (603) is derived from the stored site certificate, and
checking whether the first certificate (603) is included in the revocation control list (608) of site certificates,
wherein the signed data container (604) is received only if the first certificate (603) is a valid certificate.

3. Method of any one of claims 1 to 2, wherein the storage container (809) is encrypted using a one-time-password, wherein the one-time-password is stored in a volatile memory (802).

4. Method of claim 3, further comprising:
if the at least one predefined signature is detected,
close the encrypted storage container (809),
overwrite the one-time password.

5. Method of any one of claims 1 to 4, wherein the signed data container (604) further comprises metadata (607) including a target identifier, and
wherein the method further comprises:
receiving, from the key master computer (101), a unique identifier,
storing the unique identifier,
checking whether the target identifier equals to the unique identifier received from the key master computer (101),
wherein the step of detecting is performed only if target identifier equals the unique identifier.

6. Method of any one of claims 1 to 5, wherein the signed data container (604) further comprises an updated revocation control list of site certificates, and wherein the method further comprises updating the revocation control list.

7. Method of any one of claims 1 to 6, further comprising:
detecting whether a signed payload container (610) is included in the signed data container (604),
wherein the signed payload container (610) comprises updates of the harmful code repository and a manufacturer certificate,
verifying the signed payload container (610) using the manufacturer certificate,
wherein the signed payload container (610) is verified after verifying the signed data container (604),
if the signed data container (604) and the signed payload container (610) are verified successfully, updating the harmful code repository (810).

8. Method of any one of claims 1 to 7, wherein activating the second device interface (204) comprises mounting the storage container (809) as a virtual mass storage device.

9. Method of any one of claims 1 to 8, further comprising:
transferring the copy of the configuration data (605) to the controller device (105) via the second device interface (204).

10. Data transfer device (201) for transferring configuration data (605) for controller devices (105), the device comprising:
a first device interface (203), which is adapted to receive a removable storage medium (103, 106, 107),
a storage container (809) for storing a copy of the configuration data (605),
a harmful code repository (810) comprising a plurality of predefined data signatures,
a second device interface (204) connectable to the at least one controller device (105), and
a processing unit (801) which is adapted to carry out executable instructions to perform the following steps:
receive a certificate (603) via the first device interface (203),
receive a signed data container (604) via the first device interface (203), the signed data container (604) comprising configuration data (605) for at least one controller device (105),
verify the signed data container (604) using the certificate (603),
if the signed data container (604) is verified successfully:
- store a copy of the configuration data (605) for the at least one controller device (105) in the storage container (809),
- detect whether at least one of the predefined data signatures is included in the copy of the configuration data (605) for the at least one controller device (105),
if no predefined data signature is detected,
- activate the second device interface (204) to allow access to the copy of the configuration data (605) via the second device interface (204).

11. Device of claim 10, wherein the first device interface (203) comprises at least one USB connector (806).

12. Device of any one of claims 10 to 11, wherein the second device interface (204) comprises at least one of USB connectors (806), RS 232 connectors (807), and RS 485 connectors (807).

13. Device of any one of claims 10 to 12, wherein the controller device (105) comprises at least one of programmable logic controller (PLC) and industrial personal computer (IPC).

14. Device of any one of claims 10 to 13, wherein the device is further adapted to carry out the method of any one of claims 1 to 9.

15. Computer program product comprising computer readable instructions which are stored on a computer-readable medium or provided as a data signal, such that when the instructions are loaded and executed on a device, the instructions cause the device to perform operations according to the method of any one of claim 1 to 9.
